**Europäisches Patentamt**

**European Patent Office**

**Office européen des brevets**

(19)

(11) Veröffentlichungsnummer: **0 326 634 B1**

(12) **EUROPÄISCHE PATENTSCHRIFT**

(45) Veröffentlichungstag der Patentschrift: **18.12.91**

(51) Int. Cl.⁵: **A46D 3/00**

(21) Anmeldenummer: **88101520.0**

(22) Anmeldetag: **03.02.88**

(54) **Verfahren zur Herstellung von Borstenwaren.**

(43) Veröffentlichungstag der Anmeldung:
**09.08.89 Patentblatt 89/32**

(45) Bekanntmachung des Hinweises auf die Patenterteilung:
**18.12.91 Patentblatt 91/51**

(84) Benannte Vertragsstaaten:
**AT BE CH DE ES FR GB IT LI NL SE**

(56) Entgegenhaltungen:
**DE-A- 2 709 899**
**DE-C- 3 511 528**
**FR-A- 1 133 844**

(73) Patentinhaber: **CORONET-WERKE Heinrich Schlerf GmbH**

**W-6948 Wald-Michelbach/Odw.(DE)**

(72) Erfinder: **Weihrauch, Georg**
**Am Rossert 1**
**W-6948 Wald-Michelbach(DE)**

(74) Vertreter: **Dr.-Ing. Hans Lichti Dipl.-Ing. Heiner Lichti Dipl.-Phys. Dr. Jost Lempert**
**Postfach 41 07 60 Durlacher Strasse 31**
**W-7500 Karlsruhe 41(DE)**

EP 0 326 634 B1

Rank Xerox (UK) Business Services

**Beschreibung**

Die Erfindung betrifft ein Verfahren zur Herstellung von Borstenwaren, bestehend aus einem Borstenträger aus gieß-oder schäumfähigem Material und darin verankerten Borsten aus Kunststoff, indem die Borsten -Einzelborsten oder Borstenstränge-durch Kanäle und diese verlängernde Hülsen in eine Form für den Borstenträger eingeführt, an ihrem in der Form befindlichen Ende zur Bildung einer Verdickung thermisch aufgeschmolzen werden, daraufhin die Verdickung an den Borstenenden zur dichtenden Anlage an die Mündungsöffnung der in die Form hineinragenden Hülse gebracht und anschließend die Form mit dem Borstenträgermaterial ausgefüllt wird. Ferner ist die Erfindung auf eine Vorrichtung zur Durchführung des Verfahrens gerichtet.

Seit dem Aufkommen der Kunststoffe hat es nicht an Versuchen gefehlt, das thermoplastische Verhalten der Kunststoffe für die Herstellung der Verbindung von Borsten und Borstenträger zu nutzen. So ist bereits vor vielen Jahrzehnten vorgeschlagen worden (DE-PS 355 645), die Borsten mit ihren Befestigungsenden in eine Hohlform für den Borstenträger einzuführen und die Hohlform mit einer unter Hitze plastifizierbaren Masse auszufüllen.

Dieses Verfahren ist sehr viel später wieder aufgegriffen worden (DE-PS 895 140) und dahingehend modifiziert worden, daß für die Borsten und den Borstenträger gleiche Materialien, nämlich Polyamide oder Polyurethane verwendet werden sollen, um bei erhöhter Verarbeitungstemperatur eine Art thermischer Verschmelzung zwischen den beiden Materialien zu erhalten. Damit lassen sich aber nur Borstenwaren mit den werkstoffspezifischen Eigenschaften des jeweils verwendeten Materials herstellen, die wiederum nur bestimmten Anwendungszwecken gerecht werden. Auch handelt es sich bei den speziell vorgeschlagenen Materialien um relativ hochwertige Kunststoffe, die für viele Borstenwaren zu einer nicht vertretbaren Verteuerung führen würden.

Die Borstenträger werden heute im allgemeinen im Schäum-oder Spritzgießverfahren hergestellt, so daß sich dieses auch bei der Ausführung der vorgenannten Verfahren anbietet. Beim Spritzgießen haben sich jedoch Probleme deshalb ergeben, weil das in die Form eingespritzte flüssige Material zwischen die Borsten und zwischen diese und den sie führenden Kanälen eindringt und nach dem Erhärten zu einer unerwünscht unregelmäßigen borstenseitigen Abschlußfläche am Borstenträger führt. Auch verliert das Borstenbündel im Bereich seines Ansatzes am Borstenträger seine Elastizität, wobei -da dieses Eindringen nicht gleichmäßig geschieht- die verschiedenen Borstenbündel unter Umständen unterschiedliches Biegeverhalten zeigen. Eine anschließende Versäuberung der Ansatzstellen ist nicht oder nur mit sehr großem Aufwand möglich.

Es hat deshalb nicht an Versuchen gefehlt (DE-OS 29 22 877), den Führungskanal für jedes Borstenbündel abzudichten, indem beispielsweise das Spritzgußmaterial zunächst mit geringem Druck an die eine Formwandung gespritzt und vorerhärtet und erst danach die größere Menge des Spritzgußmaterials in die Form eingeführt wird. Dieses Verfahren ist dann, wenn man eine einwandfreie Abschlußfläche am Borstenträger erhalten will, außerordentlich aufwendig. Weiterhin wird zur Unterstützung einer schnellen Erstarrung des Materials im Ansatzbereich der Borsten ein intensives Kühlen der Kanäle vorgeschlagen, was bei eng stehenden Borstenbündeln praktisch unmöglich ist. Auch der Vorschlag, in den Führungskanälen einen Gegendruck gegen den Spritzgußdruck zu erzeugen, ist nicht praktikabel, da dieser Gegendruck wiederum zu einer unregelmäßigen Abschlußfläche am Borstenträger führt. Das gleiche gilt für ein vor dem Spritzgußvorgang erfolgendes Verschließen der Mündungsöffnungen der Führungskanäle, die nach dem Druckabbau in der Form geöffnet werden, um anschließend die Borstenstränge in das noch weichplastische Material einzudrücken. Hier wird in jedem Fall auch die Haftung zwischen Borsten und Borstenträgermaterial beeinträchtigt.Schließlich schaffen auch mechanische Abdichtungen im Bereich der Führungskanäle, z.B. durch konusförmige Verengung der Mündungsöffnung oder dort angeordnete Dichtlippen keine Lösung des Problems, denn die Borsten lassen sich nicht so dicht packen, als daß nicht zwischen ihnen kapilarartige Zwischenräume verblieben.

Um die Einbindung der Borsten im Borstenträger zu verbessern, ist es weiterhin bekannt (DE-PS 845 933, US-PS'en 2 643 158, 2 655 409,FR-PS 1 453 829), die in den Formraum hineinreichenden Borstenenden aufzuschmelzen und ggf. zu verformen, so daß jedes Borstenbündel an seinem Ende eine seinen Durchmesser überschreitende Verdickung aufweist, die mit Abstand von der einen Formwandung angeordnet ist. Nach dem Umspritzen bzw.Umschäumen der Borstenenden sind diese kraft- und formschlüssig im Borstenträger verankert, so daß sich eine ausreichende Auszugsfestigkeit ergibt. Das Problem des Austretens des Borstenträgermaterials in die Führungskanäle der Borstenstränge und zwischen die Borsten ist damit allerdings nicht gelöst.

Eine Reihe von Vorschlägen (EP-OS 0 142 885, 0 149 996 und DE-PS 35 11 528) befassen sich mit dem speziellen Problem der Erzeugung der Verdickung und der Abdichtung der Borsten bzw. Borstenbündel in den Führungskanälen des Formwerkzeugs gegenüber dem in die Form eingespritzten Borstenträgermaterial. So sollen im einen Fall (EP-OS 0 142 885) die Borstenbündel in die Führungskanäle einer Halteplatte eingeführt und an ihren diese überragenden Enden zu Verdickungen aufgeschmolzen werden. Die Halteplatte wird dann mit den sie überragenden Verdickungen an die offene Seite einer Spritzgußform bis zum dichten Abschluß derselben herangebracht und daraufhin das Borstenträgermaterial in die Form eingespritzt. Die Verdickungen sollen sich unter Wirkung des Spritzgußdrucks an die Mündungsöffnungen der Führungskanäle dichtend anlegen, um auf diese Weise das Eindringen des Borstenträgermaterials zwischen die Borsten bzw. zwischen diese und die Wandung der Führungskanäle zu vermeiden. Die Praxis zeigt, daß dieser Vorschlag nicht zum gewünschten Ziel führt. Der Spritzgußdruck baut sich annähernd isostatisch in der Form auf mit der Folge, daß er auch die Verdickungen hinterwandert und genau das Gegenteil dessen eintritt, was erwünscht ist: Es werden nämlich die Borstenbündel in die Form hereingezogen und das Borstenträgermaterial dringt zwischen die Borsten in die Führungskanäle ein.

Bei dem weiterhin bekannten Verfahren ( EP-OS 0 149 996 ) werden die Borstenenden bereits außerhalb der Form aufgeschmolzen, anschließend mit erhöhter Geschwindigkeit durch die Führungskanäle in die Form eingebracht und dort zunächst an einer Platte aufgestaucht, um die noch plastischen Borstenenden zu einer Verdickung zu formen. Durch Druck auf die Verdickungen sollen diese dann zur dichtenden Anlage an die Mündungsöffnungen der Führungskanäle gebracht und anschließend das Borstenträgermaterial eingespritzt werden. Auch dieses Verfahren ist praktisch nicht verwertbar, da ohne technische Hilfsmittel, die direkt auf die Verdickungen einwirken, kein ausreichend hoher Andruck an den Mündungsöffnungen möglich ist.

Bessere Ergebnisse lassen sich mit dem weiterhin bekannten Verfahren ( DE-PS 35 11 528 ) erzielen, wenn die durch die Führungskanäle in die Form hineinragenden Borsten an ihren Enden aufgeschmolzen und die dadurch entstehende Verdickung unter Zug an den Borsten an die Mündungsöffnung der Führungskanäle herangezogen wird. Dieses Verfahren erfordert keine Maßnahmen innerhalb des Formraums zur Erzeugung der notwendigen Dichtkräfte, vielmehr lassen sich die Dichtkräfte von außerhalb der Form aufbringen, und zwar genau in der Größenordnung, die für eine einwandfrei Abdichtung notwendig ist. Eine besonders günstige Verfahrensvariante liegt darin, daß in dem Führungskanal eine Hülse verschiebbar gelagert ist, die die Borstenstränge bzw. Borstenbündel führen. Diese Führungshülse ragt zunächst in den Formraum hinein. Ihre Mündungsöffnung wiederum wird von den Borstenenden überragt. Die Borstenenden werden aufgeschmolzen und auf die Mündungsöffnung der Führungshülse unter Bildung einer Verdickung aufgeformt. Anschließend wird die Hülse in den Führungskanal zurückgezogen und die Verdickung gegen deren Mündungsöffnung bzw. die Mündungsöffnung des Führungskanals dichtend angezogen.

Bei den drei letztgenannten Ausführungsformen erfolgt die Verankerung der Borsten innerhalb des Borstenträgers dadurch, daß zwischen der im Formraum liegenden Verdickung und der die Führungskanäle aufweisenden Formwandung ein Hinterschnitt gebildet wird, in den das Borstenträgermaterial einfließt. Die Borsten sind somit unmittelbar unterhalb der Oberfläche des Borstenträgers verankert und weisen folglich keine oder eine nur unzureichende Führung innerhalb des Borstenträgermaterials auf. Hinzu kommt, daß das in den Hinterschnitt hineinfließende Borstenträgermaterial eine nur sehr geringe Stärke besitzt mit der Folge, daß es auch nur begrenzte Auszugskräfte, die an den Borsten wirksam werden, aufnehmen kann. Schließlich hängt die Qualität der Verankerung maßgeblich davon ab, inwieweit der Hinterschnitt bzw. eine bestimmte Größe desselben garantiert werden kann. Dies ist angesichts der plastischen Verformung nur in sehr begrenztem Umfang möglich.

Der Anmelder hat sich unter Bezugnahme auf DE-A-3642129.3 freiwillig eingeschränkt und gesonderte Patentansprüche für Deutschland vorgelegt.

Ausgehend von dem eingangs angedeuteten und zuletzt beschriebenen Verfahren liegt der Erfindung die Aufgabe zugrunde, den Borsten innerhalb des Borstenträgers eine größere Führungslänge zu verleihen und die Auszugsfestigkeit der Borsten zu erhöhen.

Diese Aufgabe wird bei dem eingangs genannten Verfahren dadurch gelöst, daß die Borsten und die Hülse während des Ausfüllens der Form ihre Lage innerhalb derselben beibehalten, die Hülse und die ihrer Mündungsöffnung dicht anliegende Verdickung an den Borstenenden von dem Borstenträgermaterial umhüllt werden und die Hülse nach dem Ausfüllen der Form mit dem Borstenträgermaterial aus dem Borstenträger entformt wird.

Mit der erfindungsgemäßen Maßnahme, daß die Hülse zusammen mit den von ihr geführten Borsten und der ihrer Mündungsöffnung dichtend aufliegenden Verdickung innerhalb des Formraums und mit Abstand von der Formwandung liegt, wird die für die Verankerung maßgebliche Verdickung an den Borstenenden tiefer in das Borstenträgermaterial verlagert. Die Verdickung liegt also nicht mehr unmittelbar unterhalb der Oberfläche. Da beim Ausfüllen der Form auch die Hülse vom Borstenträgermaterial eingehüllt wird, ergibt sich nach dem Entformen ein zylindrischer Spalt zwischen den Borsten und dem Borstenträger, der jedoch ausreichend eng toleriert werden kann, um die Borsten seitlich zu führen. Es ist insbesondere auch möglich, die Hülse vor dem Öffnen der Form so frühzeitig zu ziehen, daß das noch zähflüssige bis plastische Trägermaterial unter Anhalten des Innendrucks in der Form noch soweit verformbar ist, daß der von der Hülse hinterlassenen Spalt völlig oder weitgehend geschlossen wird. Insgesamt ergibt sich dadurch eine gegenüber den bekannten Verfahren größere Führungslänge für die Borsten. Während bei den bekannten Verfahren der Form des Hinterschnittes und dem in den Hinterschnitt eindringenden Volumen dadurch Grenzen gesetzt sind, daß die Außenseite des Borstenträgers möglichst planeben sein sollte, kann beim erfindungsgemäßen Verfahren der Hinterschnitt in Form und Volumen optimiert werden, da das dort eindringende Material nunmehr unterhalb der Oberfläche liegt und gleichwohl eine ebene Oberfläche gewährleistet werden kann. Schließlich bringt das erfindungsgemäße Verfahren den Vorteil, daß selbst im Einzelfall einer nicht korrekten Abdichtung der Verdickung an der Mündungsöffnung der Hülse das eindringende Borstenträgermaterial noch innerhalb der Führungslänge erstarrt, also nicht bis an die Oberfläche des Borstenträgers vordringt. Es ist folglich einerseits nicht sichtbar, andererseits kann es die Flexibilität der Borsten, die nur durch die außerhalb des Borstenträgers liegende Borstenlänge bestimmt wird, nicht negativ beeinflussen.

Beim erfindungsgemäßen Verfahren können prinzipiell Druck-oder Zugkräfte für das Aufbringen der Dichtkräfte eingesetzt werden, wobei sich allerdings auf die Borsten wirkende Zugkräfte als günstigste Maßnahme erweist.

Das erfindungsgemäße Verfahren gibt die Möglichkeit, die Verdickung auf die Mündungsöffnung der Hülse aufzuformen, wobei man - wie bereits angedeutet - völlig unabhängig von der Formgebung des Borstenträgers und seiner Oberfläche ist.

Gemäß einer Ausführungsform des Verfahrens können mehrere in benachbarten Kanälen und Hülsen geführte Borsten an ihren Enden zu einer zusammenhängenden Verdickung umgeformt werden, wobei hier die gleichen Vorteile erzielt werden, wie bei Einzel-Einbindung jedes Borstenstrangs.

Je nach der Art der aufgebrachten Dichtkräfte kann es sich empfehlen, die Borstenstränge vor oder erst nach dem Abspritzen der Form auf die gewünschte Bündellänge zu schneiden. Der Zeitpunkt des Ablängens wird auch maßgeblich von der Arbeitsweise der Maschine und der Zuführvorrichtungen abhängig sein.

Zur Durchführung des Verfahrens geht die Erfindung von einer bekannten Vorrichtung (DE-PS 35 11 528) aus, die aus einem wenigstens zweiteiligen, den Borstenträger abformenden Formwerkzeug, dessen eines Werkzeugteil wenigstens einen Führungskanal und eine diesen in den Formraum verlängernde Hülse zum Führen der Borsten aufweist, sowie aus einer auf die die Hülse überragenden Borstenenden wirkenden Wärmequelle besteht. Bei der bekannten Vorrichtung wird die Verdickung auf den Öffnungsrand der Hülse aufgeformt, die Hülse anschließend zusammen mit den Borsten zurückgezogen, bis die Verdickung der Formwandung bzw. der mit ihr bündigen Mündungsöffnung der Hülse anliegt.

Demgegenüber zeichnet sich die erfindungsgemäße Vorrichtung dadurch aus, daß die Hülse zumindest während des Ausfüllens der Form mit dem Borstenträgermaterial in ihrer in den Formraum hineinragenden Lage gehalten und nach dem Ausfüllen der Form druch Relativbewegung gegenüber dem Borstenträger aus diesem entformbar ist.

Im Gegensatz zu der bekannten Vorrichtung verbleibt also die Hülse in ihrer in den Formraum hineinragenden Lage, bis der Formraum ausgefüllt ist, wobei zugleich die Hülse in das Borstenträgermaterial eingebettet wird. Die Abdichtung erfolgt in der Tiefe der Form an der Mündungsöffnung der Hülse. Schließlich wird die Hülse nach dem Erstarren oder in einem noch zähflüssigem bis plastischen Zustand des Borstenträgermaterials entformt, so daß sich entweder der erwähnte zylindrische Spalt um die Borsten ergibt oder aber dieser soweit verengt wird, daß er kaum oder nicht mehr in Erscheinung tritt.

Gemäß einem Ausführungsbeispiel der Erfindung ist die Hülse in einer Bohrung des Werkzeugteils verschiebbar geführt und zumindest in der in den Formraum hineinragenden Lage arretierbar und zum Entformen in das Werkzeugteil zurückziehbar.

Die verschiebliche Führung der Hülse hat den Vorteil, daß die Entformungsrichtung des Werkzeugteils und der Hülse nicht übereinstimmen muß, da die Hülse durch Zurückziehen vor dem Werkzeugteil entformt werden kann. Diese Ausführungsform eignet sich insbesondere fü r solche Borstenwaren, die an der Borstenseite eine nicht-ebene Oberfläche aufweisen, auf der die Borsten jedoch senkrecht stehen.

In weiterer vorteilhafter Ausgestaltung ist die Arretierungslage der Hülse einstellbar. Hiermit lassen sich der Abstand der Verdickung von der Oberfläche des Borstenträgers und damit die Führungslänge der Borsten innerhalb des Borstenträgers einstellen.

Gemäß einer anderen Ausführungsform ist die Hülse fest mit dem den Führungskanal aufweisenden Werkzeug verbunden, wobei die Hülse einstückig mit dem Werkzeugteil ausgebildet sein kann, indem sie einen den Führungskanal in den Formraum hineinverlängernden Kragen bildet. Diese Ausbildung empfiehlt sich für Großserien mit senkrecht zur Oberfläche an der Borstenseite des Borstenträgers stehenden Borsten und gleichbleibender Tiefenlage der Verdickungen.

Bei allen vorgenannten Ausführungsformen ist mit Vorzug die Hülse an ihrer in der Form befindlichen Stirnseite unter Bildung einer linienförmigen Kante an der Mündungsöffnung konisch verjüngt.

Diese Ausbildung ermöglicht zunächst eine linienförmige Abdichtung zwischen Verdickung und Hülse, die bekanntermaßen die funktionssicherste Art einer Dichtung darstellt. Ferner ergibt sich zwischen der konischen Stirnseite der Hülse und der demgegenüber im allgemeinen gekrümmten Oberfläche der Verdickung ein Hinterschnitt mit größtmöglichem Volumen, dessen Querschnit etwa V-förmig ist. Dadurch ergibt sich zugleich eine größtmögliche Wandstärke des Borstenträgermaterials am Hinterschnitt und somit ein größtmöglicher tragender Querschnitt gegenüber an den Borsten wirkenden Auszugskräften. Dies kann noch dadurch unterstützt werden, daß die Verdickung einen nennenswert größeren Durchmesser als der Außendurchmesser der Hülse aufweist. Die Verdickung erstreckt sich infolgedessen innerhalb des Borstenträgers bis in einen Bereich, in dem die gesamte Dicke des Borstenträgers zwischen Verdickung und borstenseitiger Oberfläche als tragender Querschnitt wirksam ist, so daß noch höhere Auszugskräfte aufgenommen werden können.

Eine weiterhin bevorzugte Ausführungsform der Vorrichtung zeichnet sich dadurch aus, daß das die Führungskanäle für die Borstenstränge aufweisende Werkzeugteil eine Klemmeinrichtung für die in die Führungskanäle eingesetzten Borsten aufweist und daß die Klemmeinrichtung unter Erzeugung von Zugkräften an den Borsten in eine von dem Werkzeugteil abgerückte Lage verschiebbar ist.

Die dem Formwerkzeug zugeführten und in die Führungskanäle des einen Werkzeugteils eingeführten Borsten werden mittels der Klemmeinrichtung eingespannt, um sie beim Abspritzen oder Ausschäumen der Form in Position zu halten. Nach dem Erwärmen der über die Hülsen hinausragenden Borstenenden und nach dem Ausbilden der Verdickungen werden die Klemmeinrichtung und das Werkzeugteil so gegeneinander verschoben, daß auf die Borsten Zugkräfte einwirken, aufgrund der die Verdickungen auf die Stirnseite der Hülsen dichtend aufgezogen werden.

Zweckmäßigerweise ist die Klemmeinrichtung an dem die Führungskanäle aufweisenden Werkzeugteil verschiebbar geführt, wobei mit Vorteil die Klemmeinrichtung mittels der auf sie übertragenen Schließbewegung des Formwerkzeugs in die abgerückte Lage verschiebbar ist. Es wird folglich die Schließbewegung des Formwerkzeugs ausgenutzt, um damit zugleich die Dichtkraft zwischen den Verdickungen und den Hülsen zu erzeugen.

Vorzugsweise ist die Klemmeinrichtung federbelastet und entgegen der Federkraft in die abgerückte Lage verschiebbar. Die Federkraft sorgt dafür, daß die Klemmeinrichtung nach dem Öffnen der Form in ihre Ausgangslage zurückkehrt, um nach Öffnen der Klemmeinrichtung neue Borsten zuführen zu können. Die auf die Borsten bzw. ihre Verdickungen wirkende Zugkraft und damit die Dichtkraft kann dadurch eingestellt werden, daß die Strecke des Schließwegs der Form, während der die Schließbewegung auf die Klemmeinrichtung übertragen wird, einstellbar ist. Stattdessen kann auch die Federkraft einstellbar sein. Schließlich ist es möglich an der Klemmeinrichtung eine einstellbare Klemmkraft auf die Borsten auszuüben, so daß beispielsweise beim überschreiten dieser Kraft die Klemmeinrichtung über die Borsten wegrutscht.

Nachstehend ist die Erfindung anhand von in der Zeichnung dargestellten Ausführungsbeispielen beschrieben. In der Zeichnung zeigen:

Figur 1    Einen schematischen Teilschnitt einer Vorrichtung zur Herstellung einer Bürste während des Ausfüllens des Formraums;

Figur 2    eine der Fig.1 ähnliche Ansicht während des Entformens der Bürste;

Figur 3    eine schematische Darstellung zweier Verfahrensstufen während der Herstellung der Bürste;

Figur 4    einen der Fig. 3 ähnlichen Teilschnitt einer ersten Ausführungsform der Hülse;

Figur 5    einen Detailschnitt einer weiteren Ausführungsform der Hülse;

Figur 6    einen Detailschnitt aus einer Bürste;

Figur 7    einen schematischen Teilschnitt einer abgewandelten Ausführung der Vorrichtung in der Öffnungslage und

Figur 8    eine der Fig. 7 entsprechende Darstellung in der Schließlage.

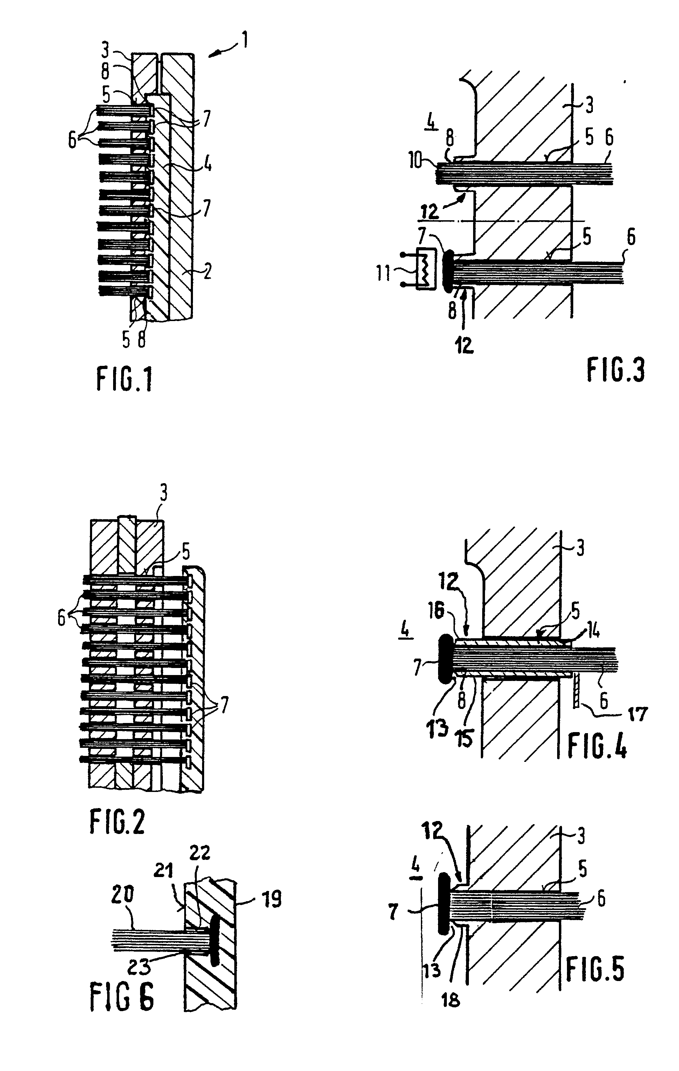

In Figur 1 ist ein Formwerkzeug 1, z.B. ein Spritzgußwerkzeug, erkennbar, das aus zwei Teilen 2,3 besteht, von denen das Werkzeugteil 3 ortsfest, das Werkzeugteil 2 demgegenüber zum Öffnen und Schließen der Form verschiebbar ist. Die beiden Werkzeugteile 2,3 schließen einen Formraum 4 ein, dessen Kontur der Außenkontur eines Borstenträgers entspricht. An dem aufspannseitigen Werkzeugteil 3 sind mehrere -beim dargestellten Ausführungsbeispiel parallele- Führungskanäle 5 angeordnet, in denen jeweils ein Borstenstrang 6 geführt ist, der mit seinem Ende in den Formraum 4 hineinragt. Die Borstenstränge 6 können als geschnittene Borstenbündel oder aber als Endlosmaterial von einer Spule zugeführt werden.

Vor dem Ausfüllen des Formraums 4 mit dem Material des Borstenträgers werden die Enden der Borstenstränge 6 aufgeschmolzen derart, daß sich an jedem Borstenstrang eine Verdickung 7 bildet. Nach oder während der Erzeugung der Verdickungen 7 werden diese in Dichtlage an den Öffnungsrand 8 der Führungskanäle gebracht und anschließend der Formraum mit dem Borstenträgermaterial ausgefüllt. Nach dem Erhärten des Borstenträgermaterials wird die Form durch Abrücken des Werkzeugteils 2 geöffnet (siehe Fig. 2) und die Bürste ausgeworfen, wobei die Borstenstränge 6 durch die Führungskanäle 5 des ortsfesten Werkzeugteils 3 hindurchgezogen werden.

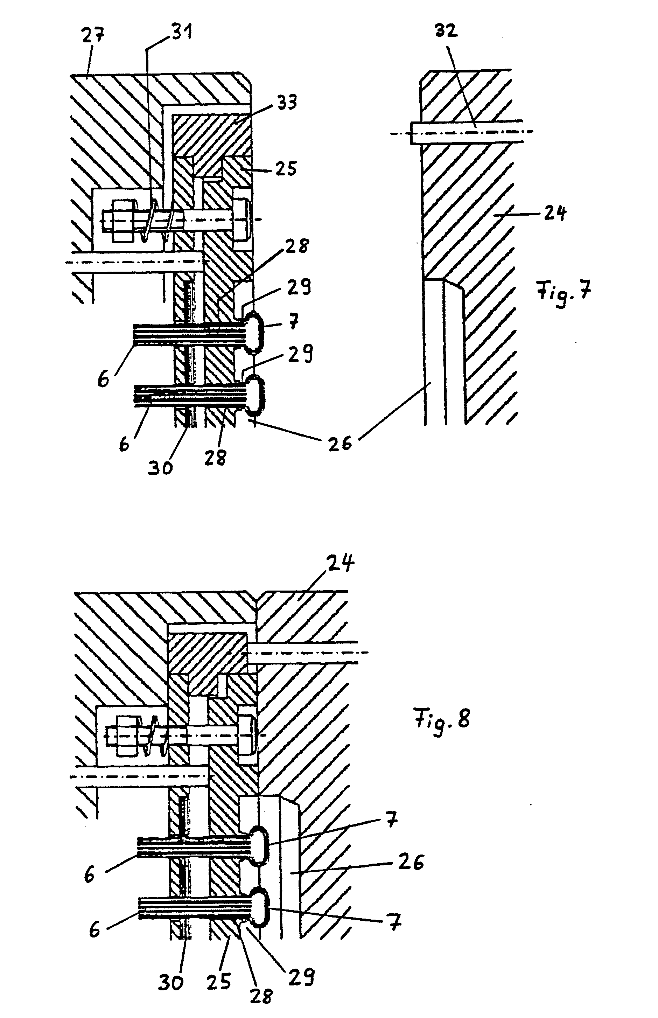

In Figur 3 sind die wesentlichen Verfahrensschritte in vergrößertem Maßstab wiedergegeben und es ist ferner erkennbar, daß der Führungskanal durch eine Hülse 12 in den Formraum hinein verlängert ist. Der Borstenstrang 6 wird in den Führungskanal 5 des Formteils 3 soweit eingeführt, bis sein vorderes Ende 10 die Mündungsöffnung 8 des Führungskanals 5 bzw. der Hülse 12 passiert hat und in den Formraum 4 hineinragt. Das Ende 10 des Borstenstrangs 6 wird zu der Verdickung 7 aufgeschmolzen, wobei bei dem gezeigten Ausführungsbeispiel eine Wärmequelle 11 vorgesehen ist, die berührungslos oder durch Kontaktwäre die notwendige Erweichungstemperatur herstellt. Die so gebildete Verdickung 7 wird zur Dichtlage an die Mündungsöffnung 8 herangebracht, beispielsweise durch Zug am Borstenstrang 6. Dabei bildet sich zwischen der Rückseite der Verdickung 7 und dem Rand der Mündungsöffnung 8 der Hülse 12 ein Hinterschnitt 13 (Fig.4 und 5), in den dann das fließfähige Material des Borstenträgers eindringen kann.

Bei der Ausführungsform gemäß Fig.4 ist der Führungskanal 5 ausschließlich von einer Führungshülse 15 gebildet, die außenseitig dicht und verschiebbar in einer Bohrung 14 des Formwerkzeugteils 3 geführt ist. Die Hülse 15 ist an ihrer Stirnseite 16 mit einer konischen Verjüngung versehen, gegen die die Verdickung 7 ausgeformt wird. Vor dem Ausfüllen des Formraums 4 bzw. dem Plastifizieren des darin befindlichen Materials wird der Borstenstrang 6 zurückgezogen, wobei die Verdickung 7 wiederum in die Dichtlage am Öffnungsrand 8 der Hülse 15gelangt. Für die Führungshülse 15 kann außenseitig eine Arretierung 17 vorgesehen sein, um sie in der in Fig.4 gezeigten oder auch in einer beliebigen anderen Lage innerhalb des Werkzeugteils 3 festzusetzen.

Figur 5 zeigt ein Ausführungsbeispiel, bei dem die Hülse 12 von einem mit dem Werkzeugteil 3 einstückigen, in den Formraum 4 hineinragenden Kragen 18 gebildet ist, der zur Mündungsöffnung 8 wiederum konisch zuläuft und den Führungskanal 5 bis in den Formraum verlängert. Hier ist insbesondere erkennbar, daß die Verdickung 7 zur Erzielung einer noch besseren Verankerung einen größeren Außendurchmesser aufweist als der Außendurchmesser des Kragens 18.

Figur 6 zeigt schließlich einen vergrößerten Detailschnitt aus einer Bürste mit einem Borstenträger 19 und einen auf Länge geschnittenen Borstenbündel 20, dessen innenliegende Verdickung 7 einschließlich des Hinterschnittes 13 in dem Borstenträger mit Abstand von dessen borstenseitigen, ebenen Oberfläche 21 eingebettet ist. Die Hülse 12 des Werkzeugteils 3 hinterläßt nach dem Entformen einen zylindrischen Spalt 22 zwischen dem Borstenträger 19 und dem Borstenbündel 20,der zur Führung des Borstenbündels dient. Dieser Spalt kann durch frühzeitiges Entformen der verschieblichen Hülse 15 vor dem Erstarren des Borstenträgermaterials völlig oder weitgehend geschlossen werden, indem das gerade noch plastische Material unter Wirkung des in der Form herrschenden Drucks zwar in den Spalt, nicht aber in die Kapillarräume zwischen den einzelnen Borsten bzw. zwischen diesen und dem Führungskanal eindringt.

In Fig. 7 und 8 ist eine andere Ausführungsform des Formwerkzeugs gezeigt. Dieses weist wiederum zwei Werkzeugteile 24, 25 auf,von denen das Werkzeugteil 24 zum Öffnen des Formraums 26 (Fig.8) verfahrbar ist, während das Werkzeugteil 25 ortsfest aber lösbar in einer Werkzeugaufnahme 27 sitzt. Das Werkzeugteil 25 weist wiederum Führungskanäle 28 mit einem diese in den Formraum verlängernden Kragen 29 auf, in die Borstenstränge 6 eingeführt werden, um an ihren in den Formraum 26 hineinreichenden Ende die Verdickungen 7 auszubilden. In Zuführrichtung der Borstenstränge 6 ist vor dem Werkzeugteil 25 eine Klemmeinrichtung 30 angeordnet, die beispielsweise aus gegeneinander verschiebbaren Platten besteht. Mittels ihr werden die Borstenstränge in Position gehalten. Nach dem Anformen der Verdickungen 7 werden die Borstenstränge mittels der Klemmeinrichtung 30 zurückgezogen um die Verdickungen 7 an die Kragen 29 dichtend anzulegen. Zu diesem Zweck ist die Klemmeinrichtung 30 an dem Werkzeugteil 25 verschieblich geführt und mittels Federn 31 in der in Fig. 7 gezeigten Ausgangslage gehalten. Beim Schließen der Form wird das Werkzeugteil 24 in Richtung auf das ortsfeste Werkzeugteil 25 zubewegt. An dem Werkzeugteil 24 sind Distanzbolzen 32, die einstellbar sein können, angeordnet. Die Distanzbolzen gelangen kurz vor dem Schließen des Formraums 26 zur Anlage an eine Druckplatte 33, an der die Klemmeinrichtung 30 befestigt ist. Beim weiteren Zufahren des Werkzeugteils 24 wird die Klemmeinrichtung 30 von dem Werkzeugteil 25 fortbewegt, so daß bei dieser Bewegung auf die Borstenstränge 6 Zugkräfte zur Wirkung kommen. Nach dem Ausfüllen des Formraums 26 mit dem Borstenträgermaterial und unmittelbar vor oder während des Abrückens des Werkzeugteils 24 wird die Klemmeinrichtung 30 gelöst, so daß die Borstenstränge 6 für das Auswerfen der Bürste freigegeben sind.

## Patentansprüche

**Patentansprüche für folgende Vertragsstaaten : AT, BE, CH, ES, FR, GB, IT, LI, NL, SE**

1. Verfahren zur Herstellung von Borstenwaren, bestehend aus einem Borstenträger aus gieß- oder schäumfähigem Material und darin verankerten Borsten aus Kunststoff, indem die Borsten-Einzelborsten oder Borstensträngedurch Kanäle und diese verlängernde Hülsen in eine Form für den Borstenträger eingeführt, an ihrem in der Form befindlichen Ende zur Bildung einer Verdickung thermisch aufgeschmolzen werden, daraufhin die Verdickung an den Borstenenden zur dichtenden Anlage an die Mündungsöffnung der in die Form hineinragenden Hülse gebracht und anschließend die Form mit dem Borstenträgermaterial ausgefüllt wird, dadurch gekennzeichnet, daß die Borsten und die Hülse während des Ausfüllens der Form ihre Lage innerhalb derselben beibehalten, die Hülse und die ihrer Mündungsöffnung dicht anliegende Verdickung an den Borstenenden von dem Borstenträgermaterial umhüllt werden und die Hülse nach dem Ausfüllen der Form mit dem Borstenträgermaterial aus dem Borstenträger entformt wird.

2. Verfahren nach Anspruch 1, dadurch gekennzeichnet, daß die Hülse zu einem Zeitpunkt entformt wird, wenn das Borstenträgermaterial bereits formstabil ist.

3. Verfahren nach Anspruch 1, dadurch gekennzeichnet, daß die Hülse zu einem Zeitpunkt entformt wird, wenn das Borstenträgermaterial gerade noch plastisch ist und unter Wirkung des in der Form noch herrschenden Spritz- oder Schäumdrucks den von der entformten Hülse hinterlassenen Freiraum ausfüllt.

4. Verfahren nach einem der Ansprüche 1 bis 3, dadurch gekennzeichnet, daß die Verdickung vor dem Einbringen des Borstenträgermaterials in die Form in die Dichtlage gebracht wird.

5. Verfahren nach einem der Ansprüche 1 bis 4, dadurch gekennzeichnet, daß die Verdickung anläßlich ihrer Erzeugung in die Dichtlage gebracht wird.

6. Verfahren nach einem der Ansprüche 1 bis 5, dadurch gekennzeichnet, daß die Verdickung durch an den Borsten wirkende Zugkräfte in die Dichtlage gebracht wird.

7. Verfahren nach einem der Ansprüche 1 bis 6, dadurch gekennzeichnet, daß die Verdickung auf die Mündungsöffnung der Hülse aufgeformt wird.

8. Verfahren nach einem der Ansprüche 1 bis 7, dadurch gekennzeichnet, daß die Verdickung so ausgebildet wird, daß zwischen ihr und der Mündungsöffnung der Hülse ein Hinterschnitt gebildet wird.

9. Verfahren nach einem der Ansprüche 1 bis 8, dadurch gekennzeichnet, daß mehrere in benachbarten Kanälen und Hülsen geführte Borsten an ihren Enden zu einer zusammenhängenden Verdickung umgeformt werden.

10. Verfahren nach einem der Ansprüche 1 bis 9, dadurch gekennzeichnet, daß Borsten und Borstenträger aus verschiedenen Kunststoffen bestehen.

11. Vorrichtung zur Durchführung des Verfahrens nach einem der Ansprüche 1 bis 10, bestehend aus einem wenigstens zweiteiligen, den Borstenträger abformenden Formwerkzeug, dessen eines Werkzeugteil wenigstens einen Führungskanal und eine diesen in den Formraum verlängernde Hülse zum Führen der Borsten aufweist, und aus einer auf die die Hülse überragenden Borstenenden wirkenden Wärmequelle, wobei die Hülse (12) zumindest während des Ausfüllens der Form (1) mit dem Borstenträgermaterial in ihrer in den Formraum (4) hineinragenden Lage gehalten und nach dem Ausfüllen der Form durch Relativbewegung zwischen der Form und dem Borstenträger (19) aus diesem entformbar ist.

12. Vorrichtung nach Anspruch 11, dadurch gekennzeichnet, daß die Hülse (12) in einer Bohrung (14) des Werkzeugteils (3) verschiebbar geführt und zumindest in der in den Formraum (4) hineinragenden Lage arretierbar und zum Entformen in das Werkzeugteil (3) zurückziehbar ist.

13. Vorrichtung nach Anspruch 11 oder 12, dadurch gekennzeichnet, daß die Arretierungslage der Hülse (12) einstellbar ist.

14. Vorrichtung nach Anspruch 11, dadurch gekennzeichnet, daß die Hülse (12) fest mit dem den Führungskanal (5) aufweisenden Werkzeugteil (3) verbunden ist.

15. Vorrichtung nach Anspruch 11, dadurch gekennzeichnet, daß die Hülse (12) einstückig mit dem den Führungskanal (5) aufweisenden Werkzeugteil (3) ausgebildet ist.

16. Vorrichtung nach Anspruch 15, dadurch gekennzeichnet, daß die Hülse (12) als den Führungskanal (5) in dem Werkzeugteil (3) in den Formraum (4) hinein verlängernder Kragen (18) ausgebildet ist.

17. Vorrichtung nach einem der Ansprüche 11 bis 16, dadurch gekennzeichnet, daß die Hülse (12) an ihrer in der Form (1) befindlichen Stirnseite (16) unter Bildung einer linienförmigen Kante an der Mündungsöffnung konisch verjüngt ist.

18. Vorrichtung nach einem der Ansprüche 11 bis 17, dadurch gekennzeichnet, daß der Außendurchmesser der Hülse (12) kleiner ist als der Außendurchmesser der Verdickung (7) an den Borstenenden (10).

19. Vorrichtung nach einem der Ansprüche 11 bis 18, dadurch gekennzeichnet, daß das die Führungskanäle (28) für die Borstenstränge (6) aufweisende Werkzeugteil (25) eine Klemmeinrichtung (30) für die in die Führungskanäle eingesetzten Borsten aufweist und daß die Klemmeinrichtung unter Erzeugung von Zugkräften an den Borsten in eine von dem Werkzeugteil (25) abgerückte Lage verschiebbar ist.

20. Vorrichtung nach einem der Ansprüche 11 bis 19, dadurch gekennzeichnet, daß die Klemmeinrichtung (30) an dem die Führungskanäle (28) aufweisenden Werkzeugteil (25) verschiebbar geführt ist.

21. Vorrichtung nach einem der Ansprüche 11 bis 20, dadurch gekennzeichnet, daß die Klemmeinrichtung (30) mittels der auf sie übertragenen Schließbewegung des Formwerkzeugs (24, 25) in die abgerückte Lage verschiebbar ist.

22. Vorrichtung nach einem der Ansprüche 11 bis 21, dadurch gekennzeichnet, daß an dem dem Werkzeugteil (25) mit den Führunskanälen (28) gegenüberliegenden Werkzeugteil (24) Distanzbolzen (32) angeordnet sind, die beim Schließen der Form auf die Klemmeinrichtung (30) einwirken.

23. Vorrichtung nach einem der Ansprüche 11 bis 22, dadurch gekennzeichnet, daß die Klemmeinrichtung (30) federbelastet und entgegen der Feder (31) in die abgerückte Lage verschiebbar ist.

24. Vorrichtung nach einem der Ansprüche 11 bis 23, dadurch gekennzeichnet, daß zur Einstellung der auf die Borsten (6) wirkende Zugkraft die wirksame Länge der Distanzbolzen (32) an dem einen Werkzeugteil (24) und/oder die Vorspannung der die Klemmeinrichtung (30) belastenden Federn (31) und/oder die von der Klemmeinrichtung (30) auf die Borsten (6) einwirkende Klemmkraft veränderbar ist.

**Patentansprüche für folgenden Vertragsstaat : DE**

1. Vorrichtung zur Herstellung von Borstenwaren, bestehend aus einem wenigstens zweiteiligen, einen Borstenträger abformenden Formwerkzeug, dessen eines Werkzeugteil wenigstens einen Führungskanal und eine diesen in den Formraum verlängernde Hülse zum Führen der Borsten aufweist, und aus einer auf die die Hülse überragenden Borstenenden wirkenden Wärmequelle wobei die Hülse (12) zumindest während des Ausfüllens der Form (1) mit dem Borstenträgermaterial in ihrer in den Formraum (4; 26) hineinragenden Lage gehalten und nach dem Ausfüllen der Form durch Relativbewegung zwischen der Form und dem Borstenträger (19) aus diesem entformbar ist und daß das die Führungskanäle (28) für die Borstenstränge (6) aufweisende Werkzeugteil (25) eine Klemmeinrichtung (30) für die in die Führungskanäle eingesetzten Borsten aufweist.

2. Vorrichtung nach Anspruch 1, dadurch gekennzeichnet, daß die Hülse (12) in einer Bohrung (14) des Werkzeugteils (3) verschiebbar geführt und zumindest in der in den Formraum (4) hineinragenden Lage arretierbar und zum Entformen in das Werkzeugteil (3) zurückziehbar ist.

3. Vorrichtung nach Anspruch 1 oder 2, dadurch gekennzeichnet, daß die Arretierungslage der Hülse (12) einstellbar ist.

4. Vorrichtung nach Anspruch 1, dadurch gekennzeichnet, daß die Hülse (12; 29) fest mit dem den Führungskanal (5; 28) aufweisenden Werkzeugteil (3; 25) verbunden ist.

5. Vorrichtung nach Anspruch 1, dadurch gekennzeichnet, daß die Hülse (12; 29) einstückig mit dem den Führungskanal (5; 28) aufweisenden Werkzeugteil (3; 25) ausgebildet ist.

6. Vorrichtung nach Anspruch 5, dadurch gekennzeichnet, daß die Hülse (12; 29) als den Führungskanal (5; 28) in dem Werkzeugteil (3; 25) in den Formraum (4; 26) hinein verlängernder Kragen (18; 29) ausgebildet ist.

7. Vorrichtung nach einem der Ansprüche 1 bis 6, dadurch gekennzeichnet, daß die Hülse (12) an ihrer in der Form (1) befindlichen Stirnseite (16) unter Bildung einer linienförmigen Kante an der Mündungsöffnung konisch verjüngt ist.

8. Vorrichtung nach einem der Ansprüche 1 bis 7, dadurch gekennzeichnet, daß der Außendurchmesser der Hülse (12) kleiner ist als der Außendurchmesser der Verdickung (7) an den Borstenenden (10).

9. Vorrichtung nach einem der Ansprüche 1 bis 8, dadurch gekennzeichnet, daß die Klemmeinrichtung (30) unter Erzeugung von Zugkräften an den Borsten in eine von dem Werkzeugteil (25) abgerückte Lage verschiebbar ist.

10. Vorrichtung nach einem der Ansprüche 1 bis 9, dadurch gekennzeichnet, daß die Klemmeinrichtung (30) an dem die Führungskanäle (28) aufweisenden Werkzeugteil (25) verschiebbar geführt ist.

11. Vorrichtung nach einem der Ansprüche 1 bis 10, dadurch gekennzeichnet, daß die Klemmeinrichtung (30) mittels der auf sie übertragenden Schließbewegung des Formwerkzeugs (24, 25) in die abgerückte Lage verschiebbar ist.

12. Vorrichtung nach einem der Ansprüche 1 bis 11, dadurch gekennzeichnet, daß an dem den Werkzeugteil (25) mit den Führungskanälen (28) gegenüberliegenden Werkzeugteil (24) Distanzbolzen (32) angeordnet sind, die beim Schließen der Form auf die Klemmeinrichtung (30) einwirken.

13. Vorrichtung nach einem der Ansprüche 1 bis 12, dadurch gekennzeichnet, daß die Klemmeinrichtung (30) federbelastet und entgegen der Feder (31) in die abgerückte Lage verschiebbar ist.

14. Vorrichtung nach einem der Ansprüche 1 bis 13, dadurch gekennzeichnet, daß zur Einstellung der auf die Borsten (6) wirkende Zugkraft die wirksame Länge der Distanzbolzen (32) an dem einen Werkzeugteil (24) und/oder die Vorspannung der die Klemmeinrichtung (30) belastenden Federn (31) und/oder die von der Klemmeinrichtung (30) auf die Borsten (6) einwirkende Klemmkraft veränderbar ist.

**Claims**
**Claims for the following Contracting States :**
**AT, BE, CH, ES, FR, GB, IT, LI, NL, SE**

1. Method for the manufacture of brushes comprising a bristle carrier of mouldable or foamable material and plastic bristles anchored therein, in that the bristles - individual bristles or bristle strands - are introduced through channels and sleeves extending the latter into a mould for the bristle carrier, are thermally melted at the end thereof located in the mould for forming a thickened portion, which is then applied to the bristle ends for sealing engagement on the opening of the sleeve projecting into the mould and the latter is then filled with the bristle carrier material, characterized in that the bristles and the sleeve maintain their position within the mould during its filling, the sleeve and the thickened portion on the bristle ends tightly engaging on its opening are enveloped by the bristle carrier material and, after filling the mould with the bristle carrier material, the sleeve is removed from the bristle carrier.

2. Method according to claim 1, characterized in that the sleeve is removed at a time when the bristle carrier material is already dimensionally stable.

3. Method according to claim 1, characterized in that the sleeve is removed at a time when the bristle carrier material is just still plastic and under the aotion of the injection moulding or foaming pressure still prevailing in the mould fills the free space left behind by the removed sleeve.

4. Method according to one of the claims 1 to 3, characterized in that prior to introducing the bristle carrier material into the mould, the thickened portion is brought into the sealing position.

5. Method according to one of the claims 1 to 4, characterized in that the thickened portion is brought into the sealing position during its production.

6. Method according to one of the claims 1 to 5, characterized in that the thickened portion is brought into the sealing position by tensile forces acting on the bristles.

7. Method according to one of the claims 1 to 6, characterized in that the thickened portion is formed on the opening of the sleeve.

8. Method according to one of the claims 1 to 7, characterized in that the thickened portion is constructed in such a way that an undercut is formed between it and the sleeve opening.

9. Method according to one of the claims 1 to 8, characterized in that the ends of several bristles guided in adjacent channels and sleeves are shaped to give a continuous thickened portion.

10. Method according to one of the claims 1 to 9, characterized in that the bristles and bristle carrier are made from different plastics.

11. Apparatus for performing the method according to one of the claims 1 to 10, comprising an at least two-part mould moulding the bristle carrier and whereof one part has at least one guide channel and a sleeve extending the same into the cavity for guiding the bristles and a heat source acting on the bristle ends projecting over the sleeve, in which, at least during the filling of the mould (1) with the bristle carrier material, the sleeve (12) is maintained in its position projecting into the mould cavity (4) and after filling the mould is removable from the latter by a relative movement between the mould and the bristle carrier (19).

12. Apparatus according to claim 11, characterized in that the sleeve (12) is displaceably guided in a bore (14) of the mould part (3) and can be fixed at least in the position projecting into the mould cavity (4) and can be retracted into the mould part (3) for removal purposes.

13. Apparatus according to claims 11 or 12, characterized in that the fixing position of the sleeve (12) is adjustable.

14. Apparatus according to claim 11, characterized in that the sleeve (12) is fixed to the mould part (3) having the guide channel (5).

15. Apparatus according to claim 11, characterized in that the sleeve (12) is constructed in one piece with the mould part (3) having the guide channel (5).

16. Apparatus according to claim 15, characterized in that the sleeve (12) is constructed as a collar (18) extending the guide channel (5) in the mould part (3) into the cavity (4).

17. Apparatus according to one of the claims 11 to 16, characterized in that on its end face (16) located in the mould (1), the sleeve (12) is conically tapered at the opening, accompanied by the formation of a linear edge.

18. Apparatus according to one of the claims 11 to 17, characterized in that the external diameter of the sleeve (12) is smaller than the external diameter of the thickened portion (7) at the bristle ends (10).

19. Apparatus according to one of the claims 11 to 18, characterized in that the mould part (25) having the guide channels (28) for the bristle strands (6) has a clamping device (30) for the bristles inserted in the guide channels and that the clamping device can be moved into a position removed from the mould part (25), accompanied by producing tensile forces on the bristles.

20. Apparatus according to one of the claims 11 to 19, characterized in that the clamping device (30) is displaceably guided on the mould part (25) having the guide channels (28).

21. Apparatus according to one of the claims 11 to 20, characterized in that the clamping device (30) can be moved into the removed position by means of the closing movement of the mould (24,25) transferred thereto.

22. Apparatus according to one of the claims 11 to 21, characterizd in that on the mould part (24) opposite to the mould part (25) with the guide channels (28) are provided spacing bolts (32), which act on the clamping device (30) on closing the mould.

23. Apparatus according to one of the claims 11 to 22, characterized in that the clamping device (30) is spring loaded and can be moved into the removed position in opposition to the spring (31).

24. Apparatus according to one of the claims 11 to 23, characterized in that for adjusting the tensile force acting on the bristles (6) the effective length of the spacing bolts (32) on one mould part (24) and/or the pretension of the springs (31) loading the clamping device (30) and/or the clamping force exerted by the clamping device (30) on the bristles (6) can be modified.

**Claims for the following Contracting State : DE**

1.  Apparatus for the manufacture of brushes, comprising an at least two-part mould moulding a bristle carrier, whereof one mould part has at least one guide channel and a sleeve extended into the mould cavity for guiding the bristles and a heat source acting on the bristle ends projecting over the sleeve, in which, at least during the filling of the mould (1) with the bristle carrier material, the sleeve (12) is kept in its position projecting into the mould cavity (4,26) and after filling the mould can be removed therefrom by a relative movement between the mould and the bristle carrier (19) and that the mould part (25) having the guide channels (28) for the bristle strands (6) has a clamping device (30) for the bristles inserted in the guide channels.

2.  Apparatus according to claim 1, characterized in that the sleeve (12) is displaceably guided in a bore (14) of the mould part (3) and can be fixed at least in the position projecting into the mould cavity (4) and can be retracted into the mould part (3) for removal purposes.

3.  Apparatus according to claims 1 or 2, characterized in that the fixing position of the sleeve (12) is adjustable.

4.  Apparatus according to claim 1, characterized in that the sleeve (12,29) is fixed to the mould part (3,25) having the guide channel (5,28).

5.  Apparatus according to claim 1, characterized in that the sleeve (12,29) is constructed in one piece with the mould part (3,25) having the guide channel (5,28).

6.  Apparatus according to claim 5, characterized in that the sleeve (12,29) is constructed as a collar (18,29) extending the guide channel (5,28) in the mould part (3,25) into the cavity (4,26).

7.  Apparatus according to one of the claims 1 to 6, characterized in that on its end face (16) located in the mould (1), the sleeve (12) is conically tapered at the opening, accompanied by the formation of a linear edge.

8.  Apparatus according to one of the claims 1 to 7, characterized in that the external diameter of the sleeve (12) is smaller than the external diameter of the thickened portion (7) at the bristle ends (10).

9.  Apparatus according to one of the claims 1 to 8, characterized in that the clamping device (30) can be moved into a position removed from the mould part (25) by producing tensile forces on the bristles.

10. Apparatus according to one of the claims 1 to 9, characterized in that the clamping device (30) is displaceably guided on the mould part (25) having the guide channels (28).

11. Apparatus according to one of the claims 1 to 10, characterized in that the clamping device (30) can be moved into the removed position by means of the closing movement of the mould (24,25) transferred thereto.

12. Apparatus according to one of the claims 1 to 11, characterized in that on the mould part (24) opposite to the mould part (25) with the guide channels (28) are provided spacing bolts (32), which act on the clamping device (30) on closing the mould.

13. Apparatus according to one of the claims 1 to 12, characterized in that the clamping device (30) is spring loaded and can be moved into the removed position in opposition to the spring (31).

14. Apparatus according to one of the claims 1 to 13, characterized in that for adjusting the tensile force acting on the bristles (6) the effective length of the spacing bolts (32) on one mould part (24) and/or the pretension of the springs (31) loading the clamping device (30) and/or the clamping force exerted by the clamping device (30) on the bristles (6) can be modified.

**Revendications**
**Revendications pour les Etats contractants suivants : AT, BE, CH, ES, FR, GB, IT, LI, NL, SE**

1.  Procédé de fabrication de brosses composées d'un porte-brosse réalisé dans un matériau coulable ou expansible et de poils en matière plastique ancrés dans ledit porte-brosse, les poils - poils individuels ou écheveaux de poils - étant introduits, au travers de canaux et de douilles prolongeant ceux-ci, dans un moule pour le porte-brosse, fondus thermiquement à leur extrémité placée dans le moule en vue de former un épaississement, après quoi l'épaississement aux extrémités des poils est appliqué de manière étanche contre l'orifice de sortie de la douille dépassant dans le moule lequel moule est ensuite rempli du matériau du porte-brosse, **caractérisé en ce** que, pendant le remplissage du moule, les poils et la douille conservent leur position à l'intérieur dudit moule; que la douille et l'épaississement aux extrémités des poils appliqué de manière étanche contre son orifice de sortie sont enveloppés par la matière pour le porte-brosse et que la douille est démoulée du porte-brosse après le remplissage du moule avec la matière pour le porte-brosse.

2. Procédé selon la revendication 1, caractérisé en ce que la douille est démoulée à un moment où la matière du porte-brosse est déjà indéformable.

3. Procédé selon la revendication 1, caractérisé en ce que la douille est démoulée à un moment où la matière du porte-brosse est encore juste plastique et remplit, sous l'action de la pression d'injection ou de moussage qui régne encore à l'intérieur du moule, l'espace vide laissé par la douille démoulée.

4. Procédé selon l'une des revendications 1 à 3, caractérisé en ce que l'épaississement est amené dans la position d'étanchement avant l'introduction de la matière de porte-brosse dans le moule.

5. Procédé selon l'une des revendications 1 à 4, caractérisé en ce que l'épaississement est amené dans la position d'étanchement à l'occasion de sa réalisation.

6. Procédé selon l'une des revendications 1 à 5, caractérisé en ce que l'épaississement est amené dans la position d'étanchement par des forces de traction agissant sur les poils.

7. Procédé selon l'une des revendications 1 à 6, caractérisé en ce que l'épaississement est conformé sur l'orifice de sortie de la douille.

8. Procédé selon l'une des revendications 1 à 7, caractérisé en ce que l'épaississement est conformé de manière à former entre ledit épaississement et l'orifice de sortie de la douille une contre-dépouille.

9. Procédé selon l'une des revendications 1 à 8, caractérisé en ce que plusieurs poils guidés dans des canaux et douilles voisins sont déformés à leurs extrémités de façon à former un épaississement continu.

10. Procédé selon l'une des revendications 1 à 9, caractérisé en ce que les poils et le porte-brosse sont réalisés dans des matières plastiques différentes.

11. Dispositif pour la mise en oeuvre du procédé selon l'une des revendications 1 à 10, composé d'un moule reproduisant le porte-brosse et constitué d'au moins deux éléments dont l'un comporte au moins un canal de guidage et une douille pour le guidage des poils qui prolonge ledit canal de guidage dans la cavité du moule, et d'une source de chaleur agissant sur les extrémités des poils qui dépassent de la douille, la douille (12) étant maintenue, au moins pendant le remplissage du moule (1) avec la matière pour le porte-brosse, dans sa position dans laquelle elle dépasse dans la cavité (4) du moule, et pouvant être démoulée du porte-brosse (19), après le remplissage du moule, par un mouvement relatif entre le moule et ledit porte-brosse.

12. Dispositif selon la revendication 11, caractérisé en ce que la douille (12) est guidée de manière mobile dans un alésage (14) de l'élément (3) du moule et qu'elle peut être arrêtée au moins dans la position dans laquelle elle dépasse dans la cavité (4) du moule et rétractée dans l'élément (3) du moule pour le démoulage.

13. Dispositif selon l'une des revendications 11 ou 12, caractérisé en ce que la position de blocage de la douille (12) est réglable.

14. Dispositif selon la revendication 11, caractérisé en ce que la douille (12) est solidaire de l'élément (3) du moule qui comporte le canal de guidage (5).

15. Dispositif selon la revendication 11, caractérisé en ce que la douille (12) est conformée d'un seul tenant avec l'élément (3) du moule comportant le canal de guidage (5).

16. Dispositif selon la revendication 15, caractérisé en ce que la douille (12) est réalisée sous la forme d'un collet (18) qui prolonge le canal de guidage (5) ménagé dans l'élément (3) du moule vers l'intérieur de la cavité (4) du moule.

17. Dispositif selon l'une des revendications 11 à 16, caractérisé en ce que la douille (12) est rétrécie de manière conique à sa face frontale (16) située à l'intérieur du moule (1), avec formation d'une arête linéaire sur l'orifice de sortie.

18. Dispositif selon l'une des revendications 11 à 17, caractérisé en ce que le diamètre extérieur de la douille (12) est plus petit que le diamètre extérieur de l'épaississement (7) aux extrémités (10) des poils.

19. Dispositif selon l'une des revendications 11 à 18, caractérisé en ce que l'élément (25) du moule comportant les canaux de guidage (28) pour les écheveaux de poils (6) comprend un dispositif de serrage (30) pour les poils insérés dans les canaux de guidage, et que le dispositif de serrage peut être déplacé dans une position écartée de l'élément (25) du moule.

20. Dispositif selon l'une des revendications 11 à 19, caractérisé en ce que le dispositif de serrage (30) est guidé de manière mobile sur l'élément (25) du moule muni des canaux de guidage (28).

21. Dispositif selon l'une des revendications 11 à 20, caractérisé en ce que le dispositif de serrage (30) peut être amené dans la position écartée au moyen du mouvement de fermeture du moule (24, 25) transmis audit dispositif.

22. Dispositif selon l'une des revendications 11 à 21, caractérisé en ce que sur l'élément (24) du moule situé en face de l'élément (25) du moule comprenant les canaux de guidage (28), sont disposés des boulons d'écartement (32) qui agissent sur le dispositif de serrage (30) lors de la fermeture du moule.

23. Dispositif selon l'une des revendications 11 à 22, caractérisé en ce que le dispositif de serrage (30) est commandé par ressort et qu'il peut être déplacé dans la position écartée dans le sens opposé à l'action du ressort (31).

24. Dispositif selon l'une des revendications 11 à 23, caractérisé en ce que, pour le réglage de la force de traction agissant sur les poils (6), la longueur active des boulons d'écartement (32) sur l'un des éléments du moule (24) et/ou la précontrainte des ressorts (31) sollicitant le dispositif de serrage (30) et/ou la force de serrage exercée par le dispositif de serrage (30) sur les poils (6) sont variables.

**Revendications pour l'Etat contractant suivant : DE**

1. Dispositif pour la fabrication de brosses, comprenant un moule reproduisant le porte-brosse et constitué d'au moins deux éléments dont l'un comporte au moins un canal de guidage et une douille pour le guidage des poils qui prolonge ledit canal de guidage dans la cavité du moule, et d'une source de chaleur agissant sur les extrémités des poils qui dépassent de la douille, la douille (12) étant maintenue, au moins pendant le remplissage du moule (1) avec la matière pour le porte-brosse, dans sa position dans laquelle elle dépasse dans la cavité (4; 26) du moule, et pouvant être démoulée du porte-brosse (19), après le remplissage du moule, par un mouvement relatif entre le moule et ledit porte-brosse; et l'élément (25) du moule munis des canaux de guidage (28) pour les écheveaux de poils (6) comprenant un dispositif de serrage (30) pour les poils insérés dans les canaux de guidage.

2. Dispositif selon la revendication 1, caractérisé en ce que la douille (12) est guidée de manière mobile dans un alésage (14) de l'élément (3) du moule et qu'elle peut être arrêtée au moins dans la position dans laquelle elle dépasse dans la cavité (4) du moule et rétractée dans l'élément (3) du moule pour le démoulage.

3. Dispositif selon l'une des revendications 1 ou 2, caractérisé en ce que la position de blocage de la douille (12) est réglable.

4. Dispositif selon la revendication 1, caractérisé en ce que la douille (12; 29) est solidaire de l'élément (3; 25) du moule qui comporte le canal de guidage (5; 28).

5. Dispositif selon la revendication 1, caractérisé en ce que la douille (12; 29) est conformée d'un seul tenant avec l'élément (3; 25) du moule comportant le canal de guidage (5; 28).

6. Dispositif selon la revendication 5, caractérisé en ce que la douille (12; 29) est réalisée sous la forme d'un collet (18; 29) qui prolonge le canal de guidage (5; 28) ménagé dans l'élément (3; 25) du moule vers l'intérieur de la cavité (4; 26) du moule.

7. Dispositif selon l'une des revendications 1 à 6, caractérisé en ce que la douille (12) est rétrécie de manière conique à sa face frontale (16) située à l'intérieur du moule (1), avec formation d'une arête linéaire sur l'orifice de sortie.

8. Dispositif selon l'une des revendications 1 à 7, caractérisé en ce que le diamètre extérieur de la douille (12) est plus petit que le diamètre extérieur de l'épaississement (7) aux extrémités (10) des poils.

**9.** Dispositif selon l'une des revendications 1 à 8, caractérisé en ce que le dispositif de serrage (30) peut être déplacé, avec génération de forces de traction agissant sur les poils, dans une position écartée de l'élément (25) du moule.

**10.** Dispositif selon l'une des revendications 1 à 9, caractérisé en ce que le dispositif de serrage (30) est guidé de manière mobile sur l'élément (25) du moule muni des canaux de guidage (28).

**11.** Dispositif selon l'une des revendications 1 à 10, caractérisé en ce que le dispositif de serrage (30) peut être amené dans la position écartée au moyen du mouvement de fermeture du moule (24, 25) transmis audit dispositif.

**12.** Dispositif selon l'une des revendications 1 à 11, caractérisé en ce que sur l'élément (24) du moule situé en face de l'élément (25) du moule comprenant les canaux de guidage (28), sont disposés des boulons d'écartement (32) qui agissent sur le dispositif de serrage (30) lors de la fermeture du moule.

**13.** Dispositif selon l'une des revendications 1 à 12, caractérisé en ce que le dispositif de serrage (30) est commandé par ressort et qu'il peut être déplacé dans la position écartée dans le sens opposé à l'action du ressort (31).

**14.** Dispositif selon l'une des revendications 1 à 13, caractérisé en ce que, pour le réglage de la force de traction agissant sur les poils (6), la longueur active des boulons d'écartement (32) sur l'un des éléments du moule (24) et/ou la précontrainte des ressorts (31) sollicitant le dispositif de serrage (30) et/ou la force de serrage exercée par le dispositif de serrage (30) sur les poils (6) sont variables.

FIG.1

FIG.2

FIG.3

FIG.4

FIG.5

FIG 6

Fig. 7

Fig. 8